# EUROPEAN PATENT APPLICATION

(11) **EP 2 803 564 A1**
(43) Date of publication of application: **19.11.2014**
(21) Application number: 13167749.4
(22) Date of filing: 14.05.2013
(51) Int. Cl.: B62M 9/1246

(54) **Multiple sprocket assembly for a bicycle and rear chain transfer device**

(71) Applicant: Lin, Chang Hui, Province of China (TW)
(72) Inventor: Lin, Chang Hui, Province of China (TW)
(74) Representative: Beck & Rössig European Patent Attorneys

(57) **Abstract**

A sprocket assembly includes a number of sprockets (11) attached to a bicycle frame (10), and a rear chain transfer device (2) having a carrier (80) attached to the bicycle frame (10) for carrying a chain (13) onto the sprockets (11), a support (20) is attached to the bicycle frame (10) and includes a tube (26) having a bore (27) and a channel (28) communicating with each other, an arm (4) includes a ring (41) engaged onto the tube (26) for supporting the carrier (80), a bearing (43) is attached to the ring (41) and engaged through the channel (28) and into the bore (27) of the tube (26), and a shaft (50) is engaged into the tube (26) and includes a helical groove (51) engaged with the bearing (43) for moving the ring (41) and the carrier (80) along the tube (26).

## Description

The invention relates to a multiple sprocket assembly for a bicycle including a carrying device for smoothly carrying and moving the chain onto the sprockets.

Typical multiple sprocket assemblies comprise a number of sprockets and a rear chain transfer device for carrying and moving the chain onto the sprockets.

However, the chain will be scrubbed with the sprockets when moved between the sprockets of different outer diameter.

The invention provides a multiple sprocket assembly as indicated in the claims to overcome these problems.
Fig. 1 is a partial plan schematic view of a sprocket assembly for a cycle;
Figs. 2, 3 are partial perspective views of the sprocket assembly;
Figs. 4, 5 are partial exploded views of the sprocket assembly;
Fig. 6 is a partial perspective view, in which a portion of the element has been cut off;
Figs. 7, 8, 9, 10 are partial perspective views; and
Figs. 11, 12, 13 are partial side plan views.

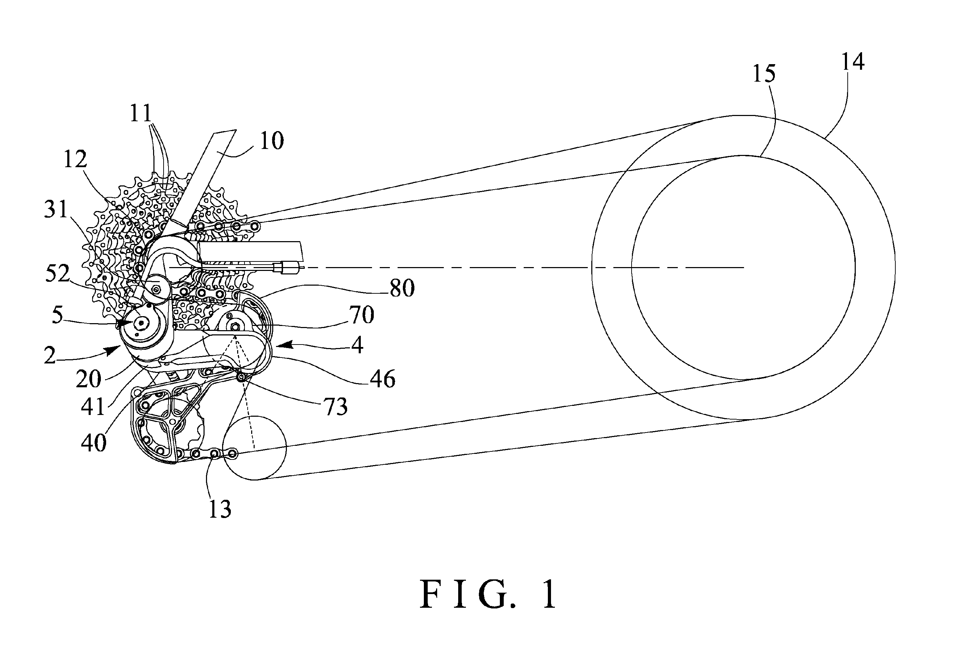

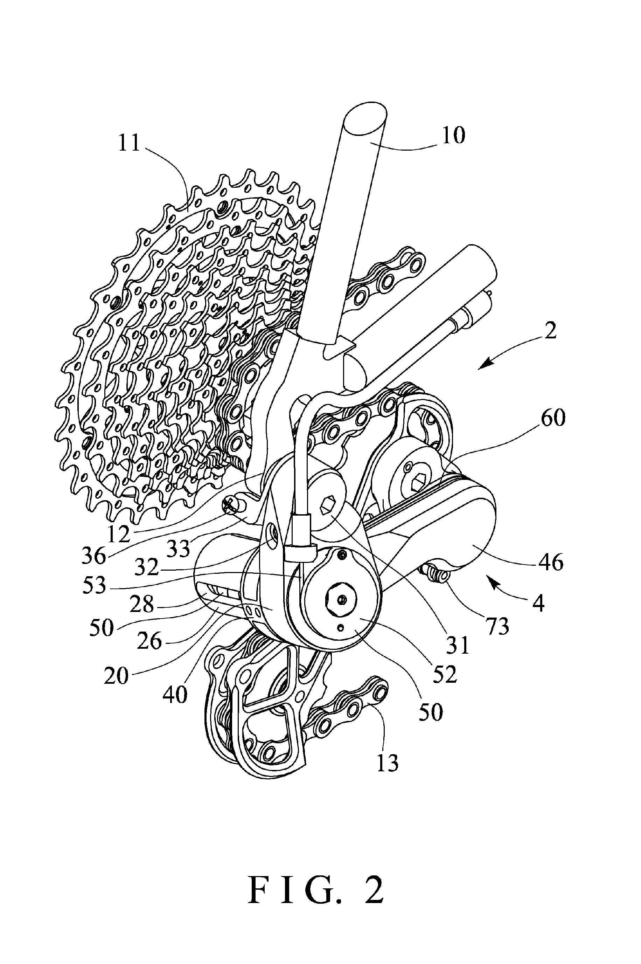

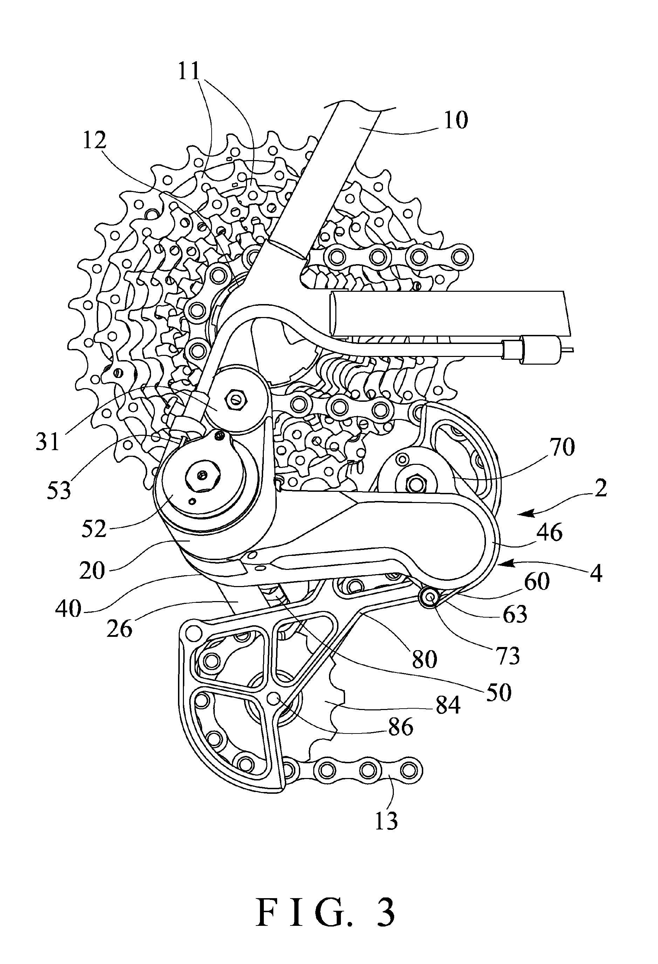

Referring to Figs. 1-3, a multiple sprocket assembly comprises a number of rear sprockets 11 attached to a rear fork 12 of a bicycle frame 10 for engaging with a chain 13, two front sprockets 14, 15, i.e. chainrings, attached to the bicycle frame 10 for engaging with the chain 13. The rear sprockets are attached to a wheel that is supported by the rear fork. The two front sprockets are part of a crankset which is rotatably supported by the bicycle frame through a bottom bracket.

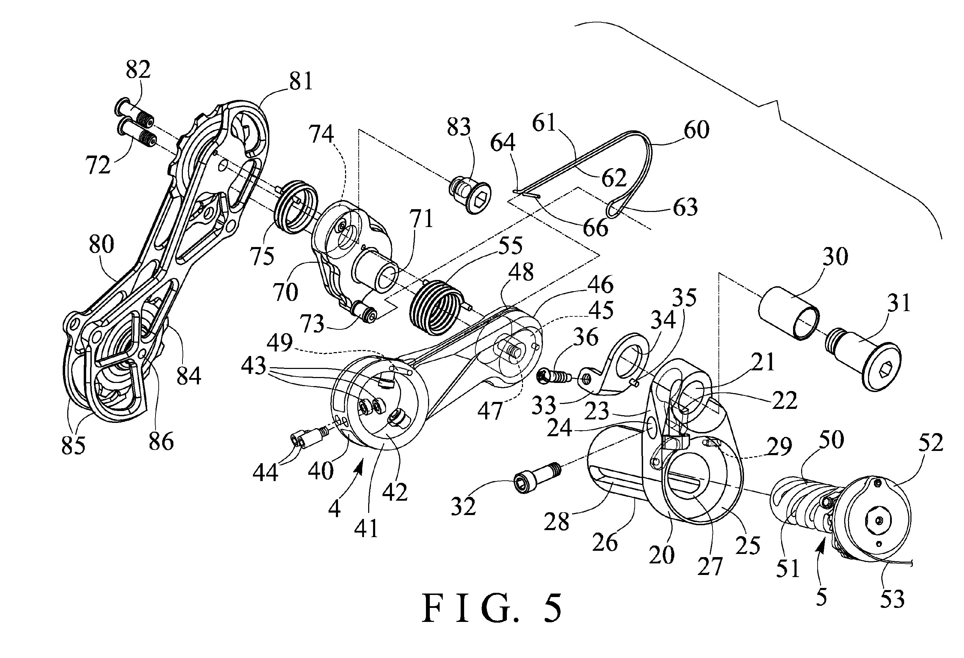

A rear chain transfer device 2, sometimes also referred to as rear dérailleur, includes a support 20 having a hole 21 for engaging with a barrel 30 and a fastener 31 which is fixed to the rear fork 12, the support 20 includes a slit 22 communicating with the hole 21 (Figs. 5-6) for forming two blades 23, an orifice 24 formed in the support 20 and communicating with the slit 22 for engaging with another fastener 32 which may force the blades 23 to clamp the support 20 and the barrel 30 or the fastener 31 together.

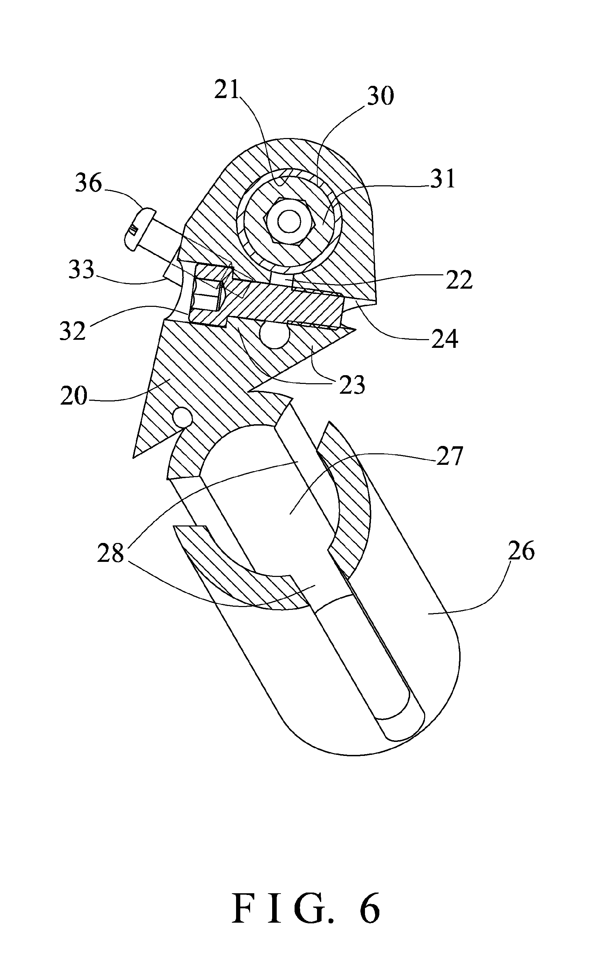

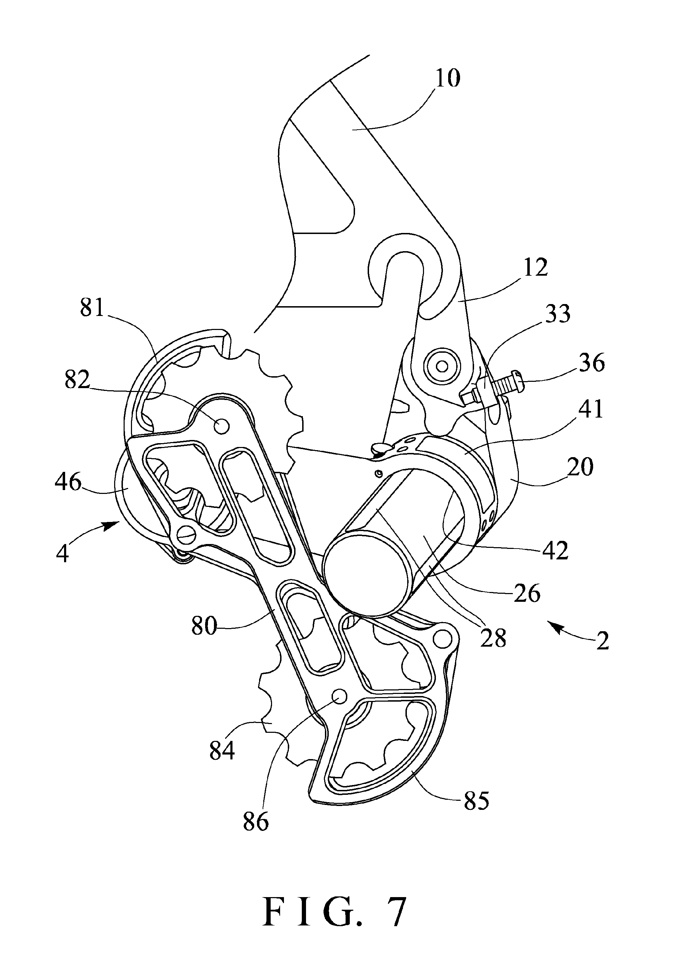

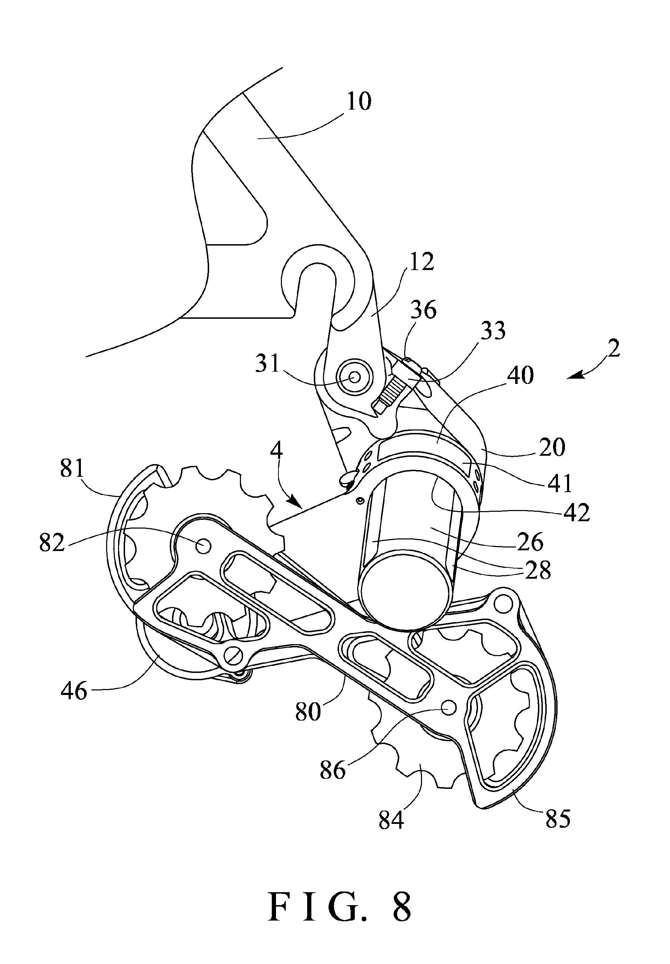

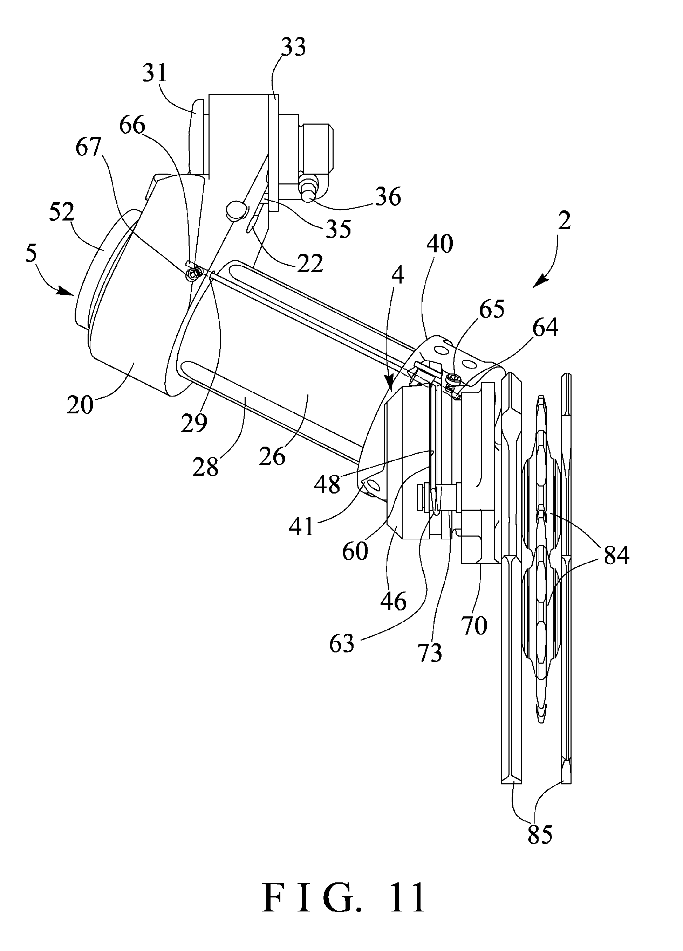

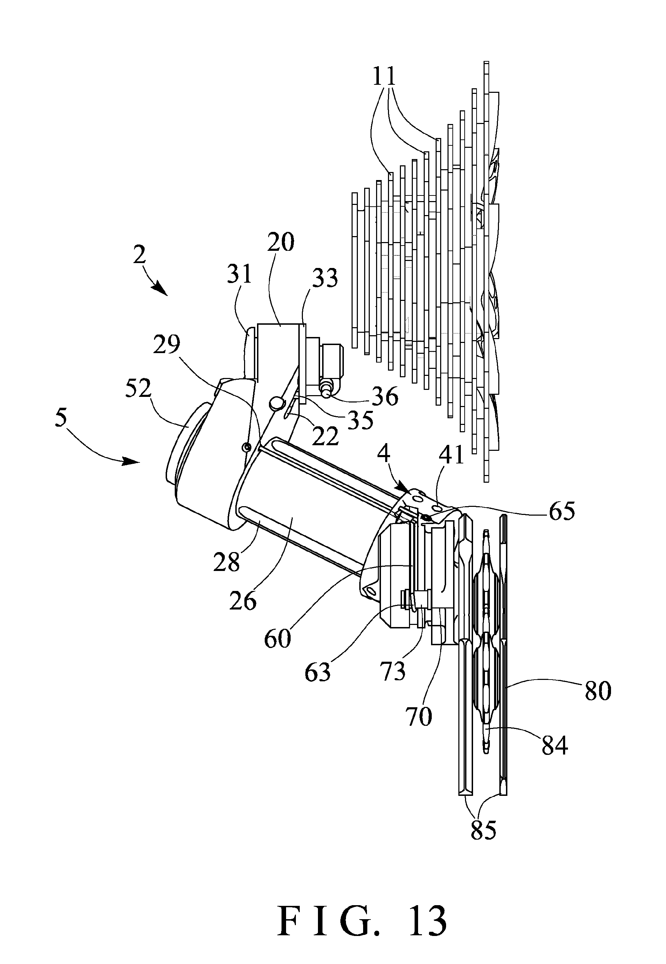

A seat 33 includes a bore 34 for engaging with the barrel 30 and the fastener 31, a projection 35 engaged into the slit 22 of the support 20 (Figs. 11-13) for anchoring the seat 33 to the support 20, and a fastener 36 is engaged with the seat 33 and the rear fork 12 of the bicycle frame 10 (Figs. 7, 8) for adjusting the seat 33 and the support 20 relative to the bicycle frame 10. The support 20 includes a compartment 25 (Fig. 5) and a hole 29 (Figs. 5, 11-13), and a tube 26 having a bore 27 communicating with the compartment 25 of the support 20, the tube 26 includes one or more channels 28 (Fig. 6) communicating with the bore 27 of the tube 26.

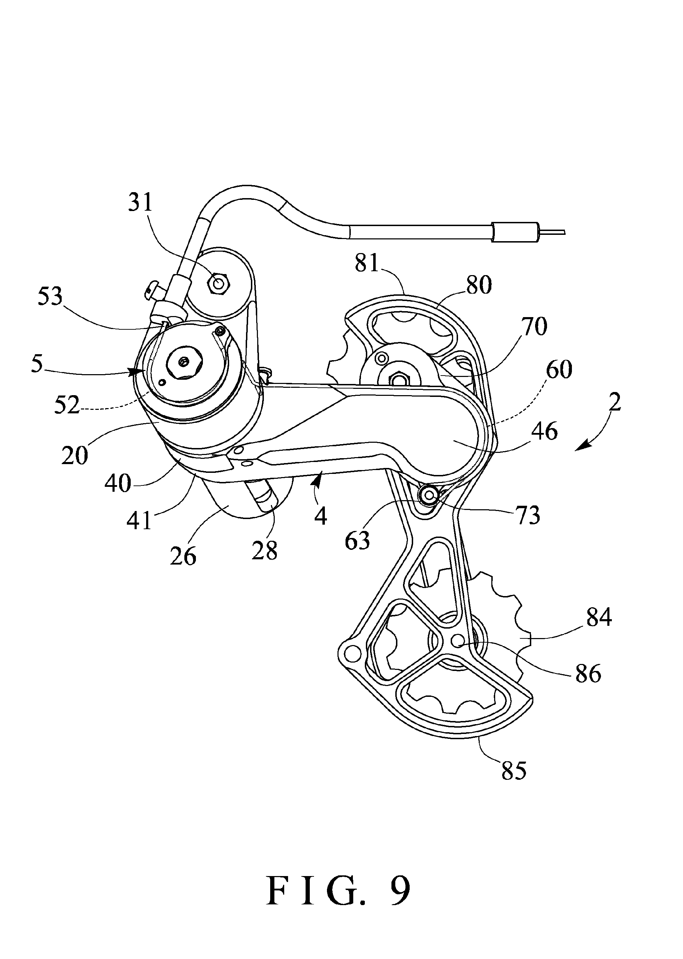

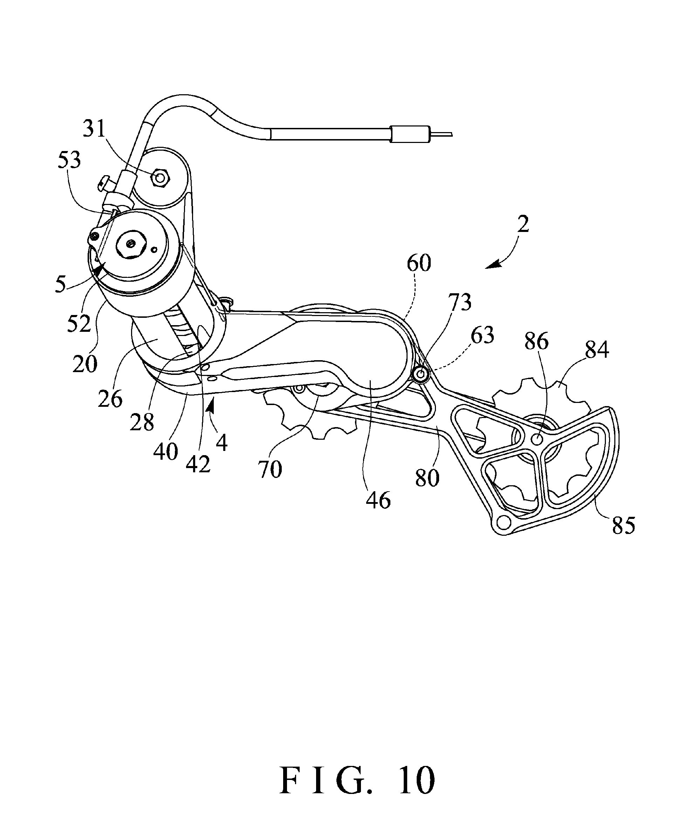

An arm 4 includes a ring 41 at one end 40 and having a bore 42 (Figs. 5, 7-8, 10) for engaging with the tube 26, one or more bearings 43 (Fig. 5) attached to the arm 4 with fasteners 44 and engaged into the bore 42 of the ring 41 or of the arm 4, and engaged through the channels 28 of the tube 26 and into the bore 27 of the tube 26 for engaging with an actuating device 5 which includes a shaft 50 engaged into the bore 27 of the tube 26, a helical groove 51 is formed in the shaft 50 for engaging with the bearings 43 and for guiding the ring 41 of the arm 4 to move along the tube 26 when the shaft 50 is rotated relative to the support 20, and a pulley 52 is formed on the shaft 50 and engaged in the compartment 25 of the support 20 for engaging with a cable 53 which may rotate the shaft 50 relative to the support 20 in order to move the ring 41 of the arm 4 along the tube 26 (Figs. 9-10).

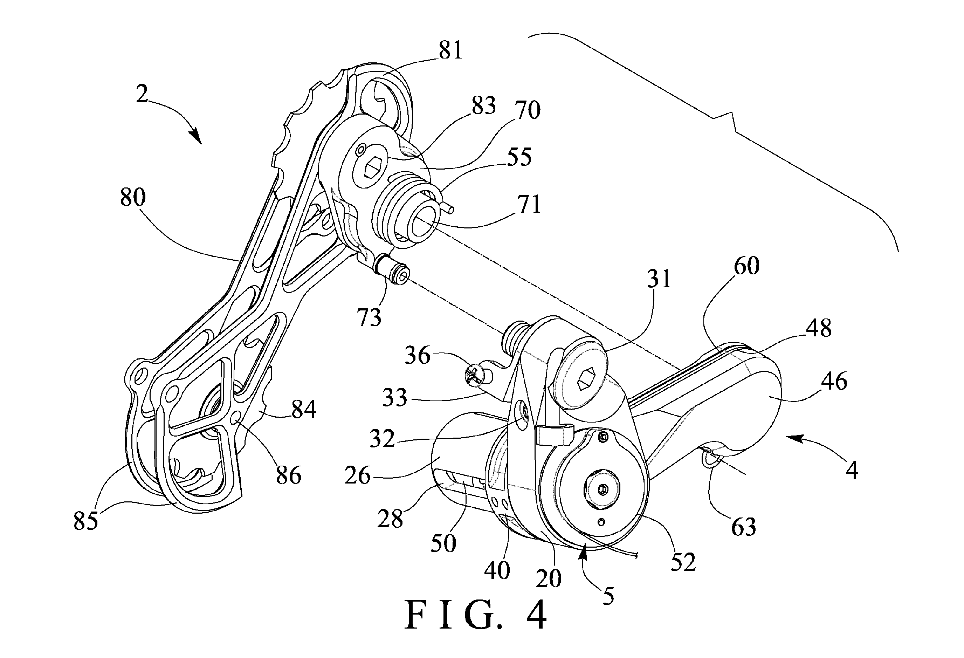

The arm 4 includes a space 45 formed in the other end 46 (Fig. 5) for engaging with a spring 55 (Figs. 4-5), a stud 47 formed in the space 45 of the arm 4, a recess 48 formed in the arm 4, and a hole 49 formed in the ring 41 (Fig. 5), another spring 60 includes two legs 61, 62 engaged in the recess 48 of the arm 4 and having a loop 63 formed between the legs 61, 62, the first or free end 64 of one leg 61 is engaged into the hole 49 of the ring 41 and secured to the ring 41 with a fastener 65 (Fig. 11). The second end 66 of the leg 62 is engaged into the hole 29 of the support 20 and secured to the support 20 and with a fastener 67. The legs 61, 62 of the spring 60 may be separated from each other and biased between the support 20 and the arm 4. A follower 70 includes a hub 71 (Fig. 5) engaged into the space 45 of the arm 4 and onto the stud 47, and secured to the arm 4 with a pin 72 which is engaged with the stud 47. The spring 55 is engaged between the arm 4 and the follower 70 for recovering the follower 70 relative to the arm 4. The arm 4 includes a peg 73 engaged with the loop 63 of the spring 60 which is biased force between the support 20 and the arm 4 and the follower 70.

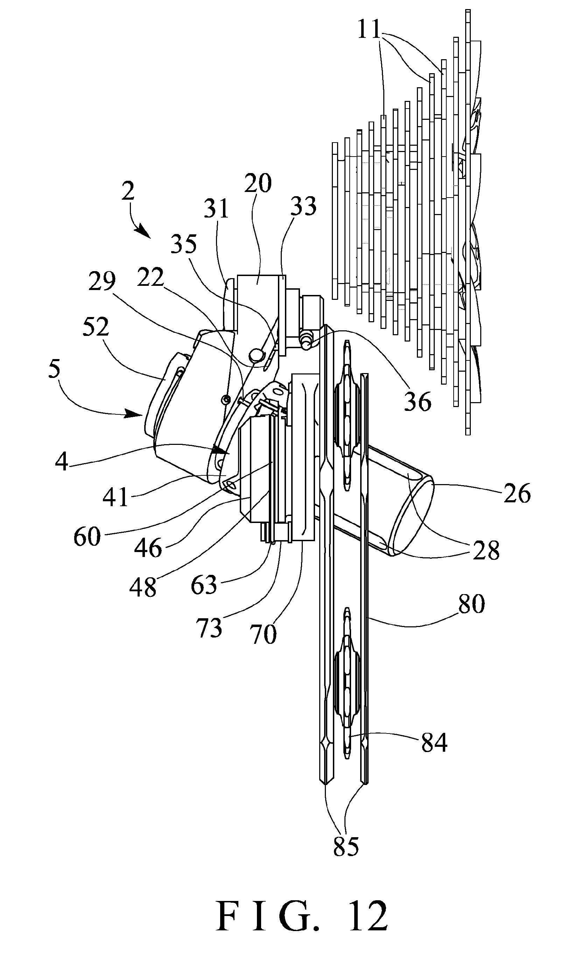

A carrier 80 includes one end 81 attached to the follower 70 with an axle 82 and a lock nut 83, one or more (such as two) jockey wheels 84 attached between two plates 85 with fasteners 86 for engaging with the chain 13, the carrier 80 may be moved relative to the sprockets 11 by the sliding of the arm 4 along tube 26 in order to move the chain 13 onto the sprockets 11 (Figs. 12-13). The follower 70 includes a recess 74 (Fig. 5) for engaging with a further spring 75 which is engaged between the carrier 80 and the follower 70 for recovering the carrier 80 relative to the follower 70. When the follower 70 and the carrier 80 are rotated relative to the arm 4 (Figs. 9-10), the springs 55, 60, 75 may recover the carrier 80 and the follower 70 relative to the arm 4.

In operation, as shown in Figs. 12-13, the carrier 80 may be moved relative to the support 20 and the sprockets 11 by the arm 4 and the cable 53, in order to move the chain 13 onto the sprockets 11, the spring 60 may move the arm 4 toward the support 20 when the cable 53 is released.

## Claims

1. A sprocket assembly comprising a number of sprockets (11) attached to a bicycle frame (10), and a rear chain transfer device (2) including a carrier (80) attached to the bicycle frame (10) for engaging with a chain (13),
**characterized in that**:
the rear chain transfer device (2) includes a support (20) attached to the bicycle frame (10), the support (20) includes a tube (26) having a bore (27) and at least one channel (28) communicating with each other, an arm (4) includes a ring (41) engaged onto the tube (26) for supporting the carrier (80), at least one bearing (43) is attached to the ring (41) and engaged through the channel (28) of the tube (26) and engaged into the bore (27) of the tube (26), and a shaft (50) is engaged into the bore (27) of the tube (26) and includes a helical groove (51) engaged with the bearing (43) for moving the ring (41) and the carrier (80) along the tube (26) and relative to the support (20) when the shaft (50) is rotated relative to the support (20).

2. A sprocket assembly as claimed in claim 1, wherein a seat (33) is attached to the support (20), and a fastener (36) is engaged with the seat (33) and the bicycle frame (10).

3. A sprocket assembly as claimed in claim 2, wherein the support (20) includes a slit (22), and the seat (33) includes a projection (35) engaged into the slit (22) of the support (20).

4. A sprocket assembly as claimed in one of claims 1 to 3, wherein a follower (70) is engaged between the arm (4) and the carrier (80).

5. A sprocket assembly as claimed in claim 4, wherein the follower (70) includes a hub (71) attached to the arm (4), and a spring (55) is engaged between the arm (4) and the follower (70).

6. A sprocket assembly as claimed in claim 4 or 5, wherein the carrier (80) is attached to the follower (70) with an axle (82), and a spring (75) is engaged between the carrier (80) and the follower (70).

7. A sprocket assembly as claimed in one of claims 4 to 6, wherein a spring (60) is engaged between the follower (70) and the arm (4) and the support (20).

8. A sprocket assembly as claimed in one of claims 4 to 7, wherein the spring (60) is engaged onto the arm (4) and coupled to the follower (70) and includes a first end (64) secured to the ring (41) of the arm (4) and a second end (66) secured to the support (20).

9. A sprocket assembly as claimed in one of claims 4 to 8, wherein the follower (70) includes a peg (73), and the spring (60) includes a loop (63) formed between two legs (61, 62) and engaged with the peg (73).

10. A sprocket assembly as claimed in one of claims 7 to 9, wherein the arm (4) includes a recess (48) for engaging with the spring (60).

## Amended claims

### Amended claims in accordance with Rule 137(2) EPC.

**1.** A sprocket assembly comprising:
a number of sprockets (11) for attachment to a bicycle frame (10), and
a rear chain transfer device (2) for attachment to the bicycle frame (10) for engaging with a chain (13), wherein the rear chain transfer device (2) includes:
a support (20) for attachmentd to the bicycle frame (10), including a tube (26) having a bore (27) and at least one channel (28) communicating with each other,
a carrier (80) for engagement with the chaim (13),
an arm (4) including a ring (41) engaged onto the tube (26) for supporting the carrier (80), and at least one bearing (43) attached to the ring (41) and engaged through the channel (28) of the tube (26) and engaged into the bore (27) of the tube (26), and
a shaft (50) engaged into the bore (27) of the tube (26) and including a helical groove (51) engaged with the bearing (43) for moving the ring (41) and the carrier (80) along the tube (26) and relative to the support (20) when the shaft (50) is rotated relative to the support (20) through actuation by a cable (53),
**characterized by**
a spring (60) engaged onto the arm (4) and including two legs (61, 62), wherein a first end (64) of one leg secured to the ring (41) of the arm (4) and a second end (66) of the other leg is secured to the support (20), the legs (61, 62) being configured to be separated from each other for biasing the arm (4) toward the support (20).

**2.** A sprocket assembly as claimed in claim 1, wherein a seat (33) is attached to the support (20), and a fastener (36) is engaged with the seat (33) and the bicycle frame (10).

**3.** A sprocket assembly as claimed in claim 2, wherein the support (20) includes a slit (22), and the seat (33) includes a projection (35) engaged into the slit (22) of the support (20).

**4.** A sprocket assembly as claimed in one of claims 1 to 3, wherein a follower (70) is engaged between the arm (4) and the carrier (80).

**5.** A sprocket assembly as claimed in claim 4, wherein the follower (70) includes a hub (71) attached to the arm (4), and a spring (55) is engaged between the arm (4) and the follower (70).

**6.** A sprocket assembly as claimed in claim 4 or 5, wherein the carrier (80) is attached to the follower (70) with an axle (82), and a spring (75) is engaged between the carrier (80) and the follower (70).

**7.** A sprocket assembly as claimed in one of claims 4 to 6, wherein the follower (70) includes a peg (73), and the spring (60) includes a loop (63) formed between two legs (61, 62) and engaged with the peg (73).

**8.** A sprocket assembly as claimed in one of claims 1 to 7, wherein the arm (4) includes a recess (48) for engaging with the spring (60).
